# EUROPÄISCHE PATENTSCHRIFT

(11) **EP 2 448 415 B1**
(45) Veröffentlichungstag und Bekanntmachung des Hinweises auf die Patenterteilung: **06.11.2013**
(21) Anmeldenummer: 10731455.1
(22) Anmeldetag: 27.05.2010
(51) Int. Cl.: A01N 59/16, A01N 43/40, C09D 5/08, C09D 5/14, A01P 1/00

(54) **ZUSAMMENSETZUNG ZUR VERHINDERUNG/ VERRINGERUNG DER MIKROBEN-INDUZIERTEN BIOKORROSION DURCH SULFAT-REDUZIERENDE BAKTERIEN (SRB) UND ANDERE MIKROORGANISMEN**
COMPOSITION FOR THE PREVENTION/REDUCTION OF MICROBE-INDUCED BIO-CORROSION CAUSED BY SULFATE-REDUCING BACTERIA (SRB) AND OTHER MICROORGANISMS
COMPOSITION POUR EMPÊCHER/RÉDUIRE LA BIOCORROSION D'ORIGINE MICROBIENNE DÛ À DES BACTÉRIES SULFATO-RÉDUCTRICES (SRB) ET À D'AUTRES MICRO-ORGANISMES

(30) Priorität: 01.07.2009 DE 102009031724
(43) Veröffentlichungstag der Anmeldung: 09.05.2012
(73) Patentinhaber: E.T.I. GmbH, 32289 Roedinghausen (DE)
(72) Erfinder: LEUTHÄUßER, Jörg, 07743 Jena (DE); ANGERMANN, Torsten, 07751 Jena-Cospeda (DE)
(74) Vertreter: Kleine, Hubertus
(86) Internationale Anmeldenummer: PCT/DE2010/000633
(87) Internationale Veröffentlichungsnummer: WO 2011/000339

(56) Entgegenhaltungen:
- WO-A1-2004/000953
- WO-A1-2009/136185
- WO-A2-02/42215
- CN-A- 101 348 630
- DD-A1- 130 983
- DE-C1- 19 510 703
- US-B1- 7 201 790
- DATABASE WPI Week 199527 Thomson Scientific, London, GB; AN 1995-203699 XP002630779, & JP 7 118103 A (DAIWA KAGAKU KOGYO KK) 9. Mai 1995 (1995-05-09)
- Hexion: "EPON Resin 828", Product Bulletin of Hexion Specialty Chemicals , 1. September 2005 (2005-09-01), Seiten 1-8, XP002628157, Gefunden im Internet: URL:http://www.kianresin.com/TDS/Resins/EP ON%20828%20e.pdf [gefunden am 2011-03-14]
- TACK J L ET AL: "Thermodynamic and mechanical properties of epoxy resin DGEBF crosslinked with DETDA by molecular dynamics", JOURNAL OF MOLECULAR GRAPHICS AND MODELLING, Bd. 26, Nr. 8, 1. Juni 2008 (2008-06-01), Seiten 1269-1275, XP022639577, ELSEVIER SCIENCE, NEW YORK, NY, US ISSN: 1093-3263, DOI: 10.1016/J.JMGM.2007.12.001 [gefunden am 2008-01-28]

## Beschreibung

Die Erfindung betrifft ein Verfahren zur Verhinderung / Verringerung der Mikroben- induzierten Biokorrosion durch Sulfat- reduzierende Bakterien (SRB) und andere Mikroorganismen, insbesondere zum Schutz von Innenwänden von Lagertanks für Kohlenwasserstoffe aller Art, und ein Verfahren zur Anwendung dieser Zusammensetzung.

Bekannte Korrosionsschutzschichten haben zumeist die Aufgabe, Oberflächen vor aerober Korrosion zu schützen. Diese aerobe Korrosion kommt u.a. in der oberen sauerstoffhaltigen Phase von befüllten Lagertanks für Kohlenwasserstoffe aller Art vor.

Von dieser aeroben Korrosion in der oberen sauerstoffhaltigen Phase von Lagertanks für Kohlenwasserstoffe aller Art muss die anaerobe Korrosion, welche im unteren Teil des befüllten Tanks vielfach abläuft, grundsätzlich unterschieden werden. Die vorherrschende anaerobe Korrosion im unteren Teil des befüllten Tanks ist eine Mikrobeninduzierte Biokorrosion mit bis zu 10fach höherer Korrosionsrate gegenüber der aeroben Korrosion. Verantwortlich für diese anaerobe Biokorrosion sind Bakterienarten, welche als "Sulfat- reduzierende Bakterien" (SRB) zusammengefasst werden.

Der Angriff der sulfat- reduzierenden Bakterien erfolgt insbesondere an Mikrorissen der Oberfläche von beschichteten Innenwänden von Lagertanks für Kohlenwasserstoffe aller Art, welche sich nach einer gewissen Alterung der Tankinnenwandbeschichung über einen längeren Zeitraum verteilt durch Zugspannungen oder andere mechanische Belastungen herausbilden.

Grundsätzlich werden Lagertanks für Kohlenwasserstoffe aller Art derzeit mit "gewöhnlichen", d.h. auf aerobe Verhältnisse abgestimmten Korrosionsschutzmassen beschichtet.

Es ist bekannt, dass polymere Netzwerke auf Basis von Epoxiden einen hohen Barriereeffekt gegen O₂-haltiges Wasser aufweisen. Dieser Barriereeffekt wird in Kombination mit speziellen Al₂O₃-Keramikpartikeln mit einer geeigneten Partikelgrößenverteilung als Füllstoff wesentlich erhöht. Diese bekannte Schichtzusammensetzung ist für den oberen, sauerstoffreichen Bereich der Tankinnenwände eine geeignete Schutzschicht gegen aerobe Korrosion (siehe dazu WO/2005/105332 und WO 2007/115649).

Für den tieferen anaeroben Bereich der Tankinnenwände, in dem ausschließlich SRB- induzierte Biokorrosion vorkommt, besteht durch diese Schutzschicht ein bisher unzureichender Schutz, insbesondere dann, wenn in der bekannten Schutzschicht Mikrorissen in Folge einer gewissen Alterung der Tankinnenwandbeschichung bestehen.

Da die Problematik der SRB-induzierten Korrosion schon länger bekannt ist, wurde bereits 1982 vorgeschlagen, epoxid-basierten Beschichtungssystemen Biozide zuzusetzen [siehe dazu: "Study of microbial corrosion in the oil storage tanks", ONGC Bulletin (1982), 19(2), 1-8)].

GB 1571901 offenbart eine zweilagige Schicht zum Schutz von Erdöllagertanks gegen SRB- Korrosion, bei welcher die erste Schicht ein Biozid enthält und die zweite Schicht eine "gewöhnliche" Epoxidharzschicht ist.

DD130983 betrifft ein Mittel zur Bekämpfung von Mikroorganismen bei der Kohlenwasserstofflagerung. Insbesondere ist das Mittel auf Zinksalze basiert, die aktiv gegen Sulfat-reduzierende Bakterien (SRB) sind. Zinksalze werden in einer konzentrierten wässrigen Lösung mit Natriumchlorid angewendet.

US7201790 offenbart ein Beschichtungssystem für Bohrinseln, Fahrzeugrahmen, Lagertanks und Schiffskörper aus einem Epoxidharz, aus einem Aminhärter, aus einem Siliciumoxid basiertem Substrat und Zinkschuppen, die auf verschiedenen Metalloberflächen Schutz gegen Angriff niederer Lebewesen gewährleistet.

WO0242215 beschreibt einen germiziden Filterapparat, der aus Keramik und Polymer besteht. Als Polymere werden Epoxidharze wie EPON 828 oder EPON 862 angewendet, die mit Amine als Aushärtungsmittels quervernetzt werden (S. 2, Ab. 4-S. 3, Ab. 2). Die Pfropfung des Substrats und die Zusammenlegung mit den bekannten Biozid Zink-Pyrithion stellen einen Filterapparat bereit.

JP7118103 offenbart ein Beschichtungssystem für Innenwände aus Stahl von Waschmaschinen. Das antimikrobielle Mittel besteht aus Zink-Pyrithion und Zinkoxid Mikropartikeln, die mit Epoxidharze gemischt sind.

Sonstige bekannte Biozid- haltige Schutzschichten im Korrosionsschutz haben entweder die Aufgabe als Filmkonservierer zu dienen, also die Schicht selbst vor mikrobiellen Angriff zu schützen oder als Antifoulingschicht die unerwünschte Besiedelung von Schiffsrümpfen (Schiffsaußenwänden) mit sesshaften Organismen aus Flora und Fauna wie Muscheln, Seepocken und verschiedenen Algen zu verhindern.

Es ist bekannt, dass das Breitbandbiozid Zn-Pyrithion (1-Hydroxypyridin-2-thion, Zink Salz, Mercaptopyridin n-Oxid, Zink Salz) eine geringe Wasserlöslichkeit besitzt (8 ppm) und als freies, in wässriger Lösung suspendiertes Salz nachweislich über längere Zeit mikrobistatisch auf eine Reihe von Bakterienspezies (u.a. auch auf eine Reihe von SRB's) wirken kann. Dabei ist das gelöste Zn- Pyrithion physio- und ökotoxikologisch nahezu unbedenklich, so dass es u.a. in Kosmetika eingebracht ist.

Beim Einsatz von Bioziden in Epoxy- Beschichtungen zur Verhinderung von SRB- Korrosion gibt es folgende grundsätzliche Phänomene zu beachten: Zum Ersten werden Biozide durch die Epoxidmatrix normalerweise fest verkapselt und damit unwirksam. Reine (unlösliche) Kontaktbiozide entfalten keine Fernwirkung, die auch zum Schutz von Mikrorissen vor SRB- Korrosion erforderlich ist.

Lösliche (durch Mikrorisse freigelegte, entkapselte) Biozide, die eine Fernwirkung entfalten, werden sozusagen ausgewaschen und damit mehr oder weniger schnell unwirksam gegenüber Mikroorganismen.

US 6,063, 849 offenbart Antifouling-Überzüge, welche neben anderen Komponenten ein Epoxidharz, Zn-Pyrithion und Keramikpartikel, die mit Aluminiumoxid beschichtet sind, umfassen.

Die Aufgabe der vorliegenden Erfindung ist es, die Nachteile des Standes der Technik zu vermeiden, in dem ein Verfahren zur Herstellung einer Epoxidharz-, Zn-Pyrithion- und Keramikpartikel- enthaltenden Zusammensetzung bereitgestellt und die Verwendung dieser Zusammensetzung als Korrosionsschutzmasse angegeben werden, wobei diese Korrosionsschutzmasse besonders effektiv Mikrorisse in Beschichtungen von Innenwänden von Lagertanks für Kohlenwasserstoffe aller Art durch einen lokal begrenzten aktiven Schutzmechanismus (Depotwirkung) möglichst lange vor anaerober Biokorrosion schützt.

Darüber hinaus soll die vorliegende Erfindung ein Verfahren zur Anwendung dieser Zusammensetzung angeben.

Gelöst werden diese Aufgaben durch eine Verfahren gemäß dem ersten Patentanspruch und einer Verwendung gemäß dem dritten Patentanspruch. Vorteilhafte Ausgestaltungen der Erfindung sind in den nachgeordneten Ansprüchen angegeben.

Die Aufgabe wird dadurch gelöst, dass ein Breitbandbiozid (Zn-Pyrithion) mit einer geringen Löslichkeit in geeigneter Weise mit Keramikfüllstoffen in einer Epoxidmatrix kombiniert wird.

Das Wesen der Erfindung besteht in der Bereitstellung einer neuartigen Zusammensetzung aus zumindest einem epoxidbasierten, polymeren Netzwerk (bspw. Kunstharz) mit zugesetzten Al₂O₃-Keramikpartikeln als Füllstoff und einem mikrobistatisch wirksamen Pyrithion- Derivat (Breitbandbiozid mit einer geringen Löslichkeit) als mikrobistatische lösemittelfreien Metallbeschichtung zu Verhinderung von SRBinduzierter Biokorrosion an Innenwänden von Lagertanks für Kohlenwasserstoffe aller Art nach Mikrobeschädigungen der Schutzschicht.

Hierdurch wird erfindungsgemäß folgendes Verhalten der Schicht erreicht:
Ist eine erfindungsgemäße Zusammensetzung auf die Innenwand von Lagertanks für Kohlenwasserstoffe aller Art aufgebracht, wirkt sie durch ihre Barrierefunktion ausreichend gegen anaerobe Bakterienkorrosion, wobei der biozide Wirkstoff (Zn- Pyrithionkristalle) verkapselt bleibt. Treten dann zeitlich folgend Mikrorisse in dieser erfindungsgemäßen Beschichtung auf, werden Biozidkristalle (Zn- Pyrithionkristalle) freigelegt. Diese freigelegten Zn- Pyrithionkristalle lösen sich sehr langsam auf und entfalten dabei eine Fernwirkung in den Spalt hinein. Die dabei auftretende biozide Depotwirkung der erfindungsgemäßen Schutzschicht wird durch erreicht, dass die äußerst gering löslichen Zn-Pyrithionkristalle adsorbtiv an den größeren keramischen Füllstoffpartikeln anhaften. Durch das zwischen die Wände des Mikrorisses zwischen den Korngrenzen des Keramikfüllstoffes eindringende Wasser aus den wasserhaltigen Phasen des im Tank enthaltenen Lagermediums Öl oder eines anderen Kohlenwasserstoffes werden Diffusionsvorgänge ermöglicht. Durch diese Diffusionsvorgänge werden nach und nach auch entferntere Biozidpartikel aktivert (gelöst) und durch die bestehende Depotwirkung ist ein lang anhaltender biozider Schutz gegen anaerobe Bakterien möglich.

Im Rahmen der Erfindung liegt auch, dass eine erfindungsgemäße Zusammensetzung in bestehende Beschichtungsschäden, wie bspw. Risse, von bestehenden Innenwandbeschichtungen von Lagertanks für Kohlenwasserstoffe aller Art eingebracht wird, wobei diese auch dort durch ihre Barrierefunktion ausreichend gegen anaerobe Biokorrosion wirkt, wobei der der biozide Wirkstoff (Zn- Pyrithionkristalle) direkt nach dem Einbringen in die Risse verkapselt bleibt. Treten danach Veränderungen an den mit der erfindungsgemäßen Zusammensetzung verfüllten Rissen in Form von Mikrorissen auf, werden Biozidkristalle (Zn-Pyrithion) freigelegt. Diese freigelegten Zn-Pyrithionkristalle lösen sich sehr langsam auf und entfalten so die notwendige Fernwirkung in Folge der Diffusion in den veränderten Mikrorissen. Die lange biozide Wirksamkeit (Depotwirkung) der Zusammensetzung in den Mikrorissen wird erfindungsgemäß dadurch erreicht, dass die gering in Wasser löslichen Biozidkristalle (Zn-Pyrithionkristalle) mit einem hohen keramischen Füllstoffanteil kombiniert in der erfindungsgemäßen Zusammensetzung kombiniert sind.

Durch in die Wände des Risses zwischen die Korngrenzen des Keramikfüllstoffes eindringendes Wasser aus den wasserhaltigen Phasen des Lagermediums Öl oder eines anderen Kohlenwasserstoffes des Tanks und dadurch ermöglichte Diffusionsvorgänge werden nach und nach auch entferntere Biozidpartikel aktiviert und durch die so erreichte Depot-/ Reservoir-Wirkung wird ein lang anhaltender biozider Schutz gegen anaerobe Korrosion ermöglicht.

Zink- Pyrithion für diesen Einsatzzweck ist besonders geeignet, wenn es erfindungsgemäß auf eine monomodale Partikelgrößenverteilung mit mittlerer Partikelgröße von 1 µm bis 6 µm gebracht wird und in vorgegebener Weise in die Formulierung eingebracht wird Hervorzuheben ist dabei, dass erfindungsgemäß diese Wirksamkeitsentfaltung bei Rissbildung untrennbar verbunden ist mit den speziellen Eigenschaften des Gesamtsystems. Sie ist nur gegeben mit Epoxid - basierenden Bindemitteln (bzw. Polyurethan- oder Polyester- oder ähnliche Bindemittel), der erfindungsgemäßen Al₂O₃-Partikelkomposition und dem gemäß der Erfindung vorbereitetem Zn-Pyrithion.

Die Schutzwirkung der erfindungsgemäßen Zusammensetzung kommt bei frischen Beschädigungen durch Risse (Rissbreite vorzugsweise im Nano- und Mikrometerbereich) zum Tragen. Diese Beschädigungen entstehen in der Regel nachdem die ausgehärtete Schicht einige Monate gealtert ist. Durch Alterungsprozesse versprödet die Schicht und es kommt in einem längeren Zeitraum durch gewöhnlich vorkommende Zugspannungen infolge von Temperaturgradienten oder durch mechanische Belastungen z.B. bei der Reinigung zu Mikrorissen. Diese stellen an ihren Innenseiten frisch aufgebrochene Oberflächen dar, welche dann die erfindungsgemäßen Eigenschaften aufweisen.

Weitere vorteilhafte Eigenschaften der Erfindung sind eine lösemittelfreie Formulierung und die Applizierbarkeit mittels Airless-Spritzverfahren in einem Schritt (Einschichter).

Zink- Pyrithion ist darüber hinaus physio- und ökotoxikologisch weitgehend unbedenklich.

Das Zn- Pyrithion liegt vorzugsweise in monomodaler Partikelgrößenverteilung mit dem Größenmaximum von 1 µm bis 6 µm.

Die Einstellung dieser Partikelgrößenverteilung erfolgt vorzugsweise im Mahlansatz zusammen mit der Al₂O₃ - Partikelkomposition und etwas Bindemittel (bspw. Glycidylkomponente des Epoxidbindemittels) mittels Dispergator (mit entsprechend geeigneter Dispergatorscheibe). Die Gesamtformulierung aus Bindemittel, Füllstoff, Additiven (bspw. Benetzungs-, Dispersions-, Verlaufs- und Entlüftungsadditive) enthält 0,1 bis 30 % Zn- Pyrithion, insbesondere 2 bis 10 %.

Als Füllstoff werden vorzugsweise Al₂O₃-Keramikpartikel verwendet. Die Art, Form und Größenverteilung dieser Partikel wird wie bspw. in WO/2005/105332 und WO 2007/115649 beschrieben, eingestellt. Vorzugsweise wird diese Al₂O₃ - Komposition zu 30 - 70 Gew.% bezogen auf die Gesamtformulierung eingesetzt.

Die Schichtmassen oder Konzentrate enthalten die erfindungsgemäßen Bestandteile in eine Menge von 30 bis 100 %, daneben gegebenenfalls 0,001 bis 10 % eines weiteren geeigneten Wirkstoffs / Biozids, sowie 5 bis 99 Gew.% eines weiteren Binde-, Extenders und/oder Vernetzungsmittels, gegebenenfalls Sikkative und Farbstoffe und Pigmente sowie weiteren in der Lacktechnik üblichen Verarbeitungsmitteln und Additiven.

Die erfindungsgemäße Formulierung der Zusammensetzung (Schichtmassen) ermöglicht in vorteilhafter Weise durch einfaches Airless- Spritzen in einem Schritt eine Schutzschicht zu applizieren, welche den Untergrund bei auftretenden Beschädigungen im Mikrometerbereich lang anhaltend vor SRB- Angriff schützt.

Verwendung findet die erfindungsemäße Zusammensetzung auch zur Innenwandbeschichtung von Pipelines für den Transport von Kohlenwasserstoffen aller Art und zur Innenwandbeschichtung von Bioreaktoren, insbesondere für anaerobe Fermentationsprozesse..

Die Erfindung wird nachstehend an Hand des folgenden Ausführungsbeispiels näher erläutert.

### Ausführungsbeispiel

Mahlansatz bestehend aus 22 % Gew.-Teile Epoxidbindemittel in Form von Glycidylkomponente des Epoxidbindemittels, 60 % Gew.-Teile Al₂O₃-Keramikfüllstoff, 9 % Gew.-Teile Zn- Pyrithion und 9 % Gew. Teile Additive werden bei 2500 U/min im Dispergator solange dispergiert / vermahlen, bis eine Partikelgrößenverteilung für das Zn-Pyrithion mit einer Größe von 1 µm bis 6 µm resultiert. Dabei werden nur die Kristalle des Zn- Pyrithions zerkleinert. Der Al₂O₃ - Zusatz dient nur als Hilfsmittel zur Vermahlung und bleibt selbst konstant. Dabei können die Messsignale der statischen Lichtstreuung für die Partikelgrößenverteilung des Al₂O₃ - Partikel gut von den Messsignalen des Zn-Pyrithions getrennt werden.

Der Mahlansatz wird mit den restlichen Rezepturbestandteilen endformuliert und innig vermischt, so dass eine Gesamtzusammensetzung von 35 Gew.% Glycidkomponente des Epoxidbindemittels, 20 Gew.% Aminkomponente des Epoxidbindemittels, 35 Gew.%Al₂O₃ Keramikfüllstoffpartikel, 5 Gew.% Zn-Pyrithion und 5 Gew.% Additive resultiert.

Zum Nachweis der Wirksamkeit der Schutzschicht gegen SRB- Angriff auf den Untergrund werden den geeigneten, beschichteten Proben künstliche Mikrorisse in der erfindungsgemäßen Beschichtung zugefügt. Diese Proben lagern 30 Tage in einem mit SRB geimpften Medium unter anaeroben Verhältnissen. Als Testorganismen dient die für SRB Kulturen repräsentative Spezies *Desulfovibrio vulgaris* in Reinkultur. Infolge der nun ablaufenden Biokorrosion entstehen "Korrosionsmulden". Durch Vergleich dieser unterschiedlichen ausgeprägten Korrosionsmulden können Rückschlüsse auf den Schutzgrad der Schicht gezogen werden. Als 100 %iger Schutz wird eine Fernwirkung von mindestens 5 µm vom Rand des Mikrorisses aus definiert. Dieses Ergebnis wird durch das Ausführungsbeispiel erreicht.

## Patentansprüche

1. Verfahren zum Herstellen einer Zusammensetzung zur Innenwandbeschichtung von Lagertanks für Kohlenwasserstoffe aller Art umfassend mindestens ein epoxidbasiertes Al₂O₃-Keramikpartikel-enthaltendes Bindemittel und ein mikrobistatisch wirksames Pyrithion- Derivat bei dem die Kristalle des Zn-Pyrithions zerkleinert und die Al₂O₃-Keramikpartikel in ihrer Größe Konstant bleiben, und der so behandelte Mahlansatz mit den weiteren Bestandteilen der Zusammensetzung endformuliert und innig vermischt wird, so dass eine Gesamtzusammensetzung von 35 Gew.% Glycidkomponente des Epoxidbindemittels, 20 Gew.% Aminkomponente des Epoxidbindemittels, 35 Gew.%Al₂O₃ Keramikfüllstoffpartikel, 5 Gew.% Zn- Pyrithion und 5 Gew.% Additive resultiert.

2. Verfahren zum Herstellen einer Zusammensetzung zur Innenwandbeschichtung von Lagertanks für Kohlenwasserstoffe aller Art gemäß Anspruch 1, **dadurch gekennzeichnet, dass** der Mahlansatz aus 22 % Gew.-Teile Glycidylkomponente des Epoxidbindemittels, 60 % Gew.-Teile Al₂O₃-Keramikfüllstoff und 9 % Gew.-Teile Zn- Pyrithion und 9 % Gew.-Teile Additive besteht und in einem Dispergator solange dispergiert / vermahlen werden, bis eine Partikelgrößenverteilung für das Zn-Pyrithion mit einer Partikelgröße von 1 µm bis 6 µm erreicht ist,

3. Verwendung einer Zusammensetzung zur Innenwandbeschichtung von Lagertanks für Kohlenwasserstoffe aller Art umfassend mindestens ein epoxidbasiertes Al₂O₃-Keramikpartikel-enthaltendes Bindemittel und ein mikrobistatisch wirksames Pyrithion-Derivat als lösemittelfreie Metallbeschichtung zur Verhinderung von Mikrobeninduzierter Biokorrosion an Innenwänden von Lagertanks für Kohlenwasserstoffe aller Art.

4. Verwendung einer Zusammensetzung gemäß Anspruch 3, **dadurch gekennzeichnet, dass** die Zusammensetzung durch Airless- Spritzen auf die Innenwände in einem Schritt aufgetragen wird.

5. Verwendung einer Zusammensetzung gemäß Anspruch 3 oder 4, **dadurch gekennzeichnet, dass** die Zusammensetzung zur Beseitigung von Beschichtungsschäden an den Innenwänden eingesetzt wird.

6. Verwendung einer Zusammensetzung zur Innenwandbeschichtung von Lagertanks für Kohlenwasserstoffe aller Art umfassend mindestens ein epoxidbasiertes Al₂O₃-Keramikpartikel-enthaltendes Bindemittel und ein mikrobistatisch wirksames Pyrithion- Derivat als lösemittelfreie Metallbeschichtung zur Verhinderung von Mikrobeninduzierter Biokorrosion an Innenwänden von Pipelines für den Transport von Kohlenwasserstoffen aller Art.

7. Verwendung einer Zusammensetzung zur Innenwandbeschichtung von Lagertanks für Kohlenwasserstoffe aller Art umfassend mindestens ein epoxidbasiertes Al₂O₃-Keramikpartikel-enthaltendes Bindemittel und ein mikrobistatisch wirksames Pyrithion- Derivat als lösemittelfreie Metallbeschichtung zur Verhinderung von Mikrobeninduzierter Biokorrosion an Innenwänden von Bioreaktoren..

## Claims

1. Method for producing a composition for coating the inner walls of storage tanks for hydrocarbons of all kinds comprising at least one epoxy-based Al₂O₃ ceramic particle-containing binding agent and a microbiostatically effective pyrithione derivative in which the Zn-pyrithione crystals are crushed and the Al₂O₃ ceramic particles remain constant in size, and the thus treated grinding-base undergoes a final formulation and is thoroughly mixed with the other ingredients of the composition, so that an overall composition of 35 wt% of glycid components of the epoxy binding agent, 20 wt% amine components of the epoxy binding agent, 35 wt.% Al₂O₃ ceramic filler particles, 5 wt.% of Zn-pyrithione and 5 wt.% of additives results.

2. Method for producing a composition for coating the inner walls of storage tanks for hydrocarbons of all kinds according to claim 1, **characterized in that** the grinding-base consists of 22% in parts by weight of glycidyl components of the epoxy binding agent, 60% parts by weight of Al₂O₃ ceramic filler, and 9% by weight of Zn-pyrithione and 9% by weight of additives and is dispersed/ground in the dispersant for so long until a particle size distribution for the Zn-pyrithione with a particle size of 1 µm to 6 µm is reached.

3. Use of a composition for coating the inner walls of storage tanks for hydrocarbons of all kinds comprising at least one epoxy-based Al₂O₃ ceramic particle-containing binding agent and a microbiostatically effective pyrithione derivative as a solvent-free metal coating for the prevention of microbe-induced bio-corrosion on the inner walls of storage tanks for hydrocarbons of all kinds.

4. Use of a composition according to claim 3, **characterized in that** the composition is applied to the inner walls in one step by means of airless spraying.

5. Use of a composition according to claim 3 or 4, **characterized in that** the composition is used for the removal of coating damage on the inner walls.

6. Use of a composition for coating the inner walls of storage tanks for hydrocarbons of all kinds comprising at least one epoxy-based Al₂O₃ ceramic particle-containing binding agent and a microbiostatically effective pyrithione derivative as a solvent-free metal coating for the prevention of microbe-induced bio-corrosion on the inner walls of pipelines used for the transport of hydrocarbons of all kinds.

7. Use of a composition for coating the inner walls of storage tanks for hydrocarbons of all kinds comprising at least one epoxy-based Al₂O₃ ceramic particle-containing binding agent and a microbiostatically effective pyrithione derivative as a solvent-free metal coating for the prevention of microbe-induced bio-corrosion on the inner walls of bioreactors.

## Revendications

1. Procédé d'obtention d'une composition de revêtement des parois internes de réservoirs de stockage d'hydrocarbures de tous types comportant au moins un liant à base d'époxyde renfermant des particules céramiques en Al₂O₃ et un dérivé de pyrithione ayant une efficacité statique contre les micro-organismes selon lequel les cristaux de pyrithione de zinc sont broyés tandis que les particules céramiques en Al₂O₃ ont une granulométrie qui reste constante, et la base broyée ainsi traitée est soumise à une formulation finale avec les autres composants de la composition et mélangée intimement de façon à obtenir une composition totale de 35 % en poids de composés glycidiques du liant à base d'époxyde, 20 % en poids de composés aminés du liant à base d'époxyde, 35 % en poids de particules de charge céramiques en Al₂O₃, 5% en poids de pyrithione de Zn et 5 % en poids d'additifs.

2. Procédé d'obtention d'une composition de revêtement des parois internes de réservoirs de stockage d'hydrocarbures de tous types conforme à la revendication 1,
**caractérisé en ce que**
la base broyée est constituée de 22% en poids de composés glycidyliques du liant à base d'époxyde, 60 % en poids de charge céramique en Al₂O₃, 9 % en poids de pyrithione de zinc et 9 % en poids d'additifs, et est dispersée/broyée dans un dispersant jusqu'à avoir atteint une répartition dimensionnelle des granules de la pyrithione du zinc avec une granulométrie de 1 µm à 6 µm.

3. Utilisation d'une composition de revêtement des parois internes de réservoirs de stockage d'hydrocarbures de tous types comprenant au moins un liant à base d'époxyde renfermant des particules céramiques en Al₂O₃, et un dérivé de pyrithione ayant une efficacité statique contre les micro-organismes en tant que revêtement métallique exempt de solvant pour empêcher la bio-corrosion induite par les micro-organismes sur les parois internes de réservoirs de stockage d'hydrocarbures de types quelconques.

4. Utilisation d'une composition conforme à la revendication 3,
**caractérisé en ce que**
la composition est appliquée par pulvérisation en l'absence d'air sur les parois internes en une étapes.

5. Utilisation d'une composition conforme à la revendication 3 ou 4,
**caractérisé en ce que**
la composition est mise en oeuvre pour éliminer les détériorations du revêtement sur les parois internes.

6. Utilisation d'une composition destinée au revêtement des parois internes de réservoirs de stockage d'hydrocarbures de tous types comportant au moins un liant à base d'époxyde renfermant des particules céramiques en Al₂O₃, et un dérivé de pyrithione ayant une efficacité statique contre les micro-organismes en tant que revêtement métallique exempt de solvant pour éviter la bio-corrosion induite par les micro-organismes sur les parois internes de pipelines pour le transport d'hydrocarbures de tous types.

7. Utilisation d'une composition pour le revêtement des parois internes de réservoirs de stockage d'hydrocarbures de tous types comportant au moins un liant à base d'époxyde renfermant des particules céramiques en Al₂O₃, et un dérivé de pyrithione ayant une efficacité statique contre les micro-organismes en tant que revêtement métallique exempt de solvant pour éviter la bio-corrosion induite par les micro-organismes sur les parois internes de bio-réacteurs.
